# EUROPÄISCHE PATENTSCHRIFT

(11) **EP 3 004 690 B1**
(45) Veröffentlichungstag und Bekanntmachung des Hinweises auf die Patenterteilung: **03.10.2018**
(21) Anmeldenummer: 14730774.8
(22) Anmeldetag: 27.05.2014
(51) Int. Cl.: F16H 55/22, F16H 55/06

(54) **SCHNECKENWELLE**
WORM SHAFT
ARBRE À VIS SANS FIN

(30) Priorität: 28.05.2013 DE 102013105478
(43) Veröffentlichungstag der Anmeldung: 13.04.2016
(73) Patentinhaber: EJOT GmbH & Co. KG, 57319 Bad Berleburg (DE)
(72) Erfinder: KIND, Andreas, 99897 Tambach-Dietharz (DE); PINZL, Wilfried, 99897 Tambach-Dietharz (DE)
(74) Vertreter: Puschmann Borchert Bardehle Patentanwälte Partnerschaft mbB
(86) Internationale Anmeldenummer: PCT/EP2014/060996
(87) Internationale Veröffentlichungsnummer: WO 2014/191434

(56) Entgegenhaltungen:
- JP-A- 2005 170 080
- US-A1- 2003 213 324

## Beschreibung

Die Erfindung betrifft eine Schneckenwelle gemäß dem Oberbegriff des Anspruches 1 und ein Verfahren zur Herstellung einer solchen gemäß Anspruch 7.

Aus der US 2007/0295134 A1 ist eine Schneckenwelle zum Antrieb einer Spiegelverstelleinrichtung bekannt. Diese Schneckenwelle weist einen Schaft mit einem ersten und einem zweiten Ende auf, wobei auf diesen Schaft ein einen Schneckengang tragendes erstes Bauteil mit einem ersten Ende aufgeschoben und durch einen Splint drehfest arretiert wird. Diese Schneckenwelle weist zudem ein zweites Ende auf, wobei das erste und das zweite Bauteil in einem vordefinierten Abstand durch ein Bindeglied verbunden sind.

Auch die EP 1 264 735 A1 offenbart eine Spiegelverstelleinrichtung, die eine Schneckenwelle zum Antrieb des Spiegels aufweist, wobei die Schneckenwelle ein Stirnrad und einen Schneckengang aufweisenden Teil umfasst, die mit ihren zwei Endpunkten am Spiegelrahmen gelagert ist.

Die DE 10 2004 058 152 B3 offenbart eine Schneckenwelle mit einem ersten, einen Schneckengang aufweisenden Bauteil und einem zweiten Schneckenwellenende. Das einen Schneckengang aufweisende Bauteil weist eine Einschnürung als Fixierbereich auf, in welchem das zweite Schneckenwellenende über eine Klammer arretiert werden kann. Diese Schneckenwelle wird vorzugsweise zweiteilig hergestellt, wobei eine axiale Festlegung zweier Bauteile zueinander über einen Klemmbereich realisiert wird. Zudem ist eine weitere Ausbildung denkbar, bei welcher die Schneckenwelle gegenüber dem Gehäuse über eine Splintklammer fixiert wird.

Die DE 197 25 414 A1 offenbart eine einteilige Schneckenwelle mit einem ersten und zweiten Ende. Die Schneckenwelle wird über eine Motorantriebswelle angetrieben und mit einem Mitnehmerelement versehen.

Die DE 10 2012 010 869 A1 offenbart eine Schneckenwelle mit einem ersten Adapterende, welches wiederum über ein Verbindungselement mit einem Adapterelement einer Motorwelle verbunden ist.
Die US 6,912,927 B2 offenbart eine mehrteilige, insbesondere eine zweiteilige Schneckenwelle, die aus mehreren Schneckenwellenteilen bausatzartig zusammengesetzt werden kann.
Die oben genannten Systeme haben den Nachteil, dass sie in ihrer axialen Ausdehnung speziell auf bestimmte Antriebe ausgelegt sind.
Für eine Anpassung an entsprechende Bauteile müssen gemäß den bekannten Schriften spezielle Teile für jegliche Ausgestaltung hergestellt werden. Diese entsprechen dann in der Summe ihrer axialen Ausdehnungen dem axialen Abstand der Enden.

Die US2003/213324A1 offenbart eine Schneckenwelle, die nach Auffassung der Prüfungsabteilung des europäischen Patentamts unter den Wortlaut des Oberbegriffs des Anspruchs 1 fällt.

Es ist nunmehr Aufgabe der Erfindung eine Schneckenwelle anzugeben, die auf einfache Weise flexibel an unterschiedliche axiale Ausdehnungen anpassbar ist, ohne dass unterschiedliche gewindetragende Teile hergestellt werden müssen.

Diese Aufgabe wird erfindungsgemäß durch eine Schneckenwelle mit den Merkmalen des Anspruchs 1 gelöst. Durch eine einteilige, das erste und das zweite Bauteil wenigstens teilweise umhüllende Ausgestaltung des Bindeglieds kann auf einfache Weise, basierend auf Normteilen eine flexible, stufenlose Anpassung der axialen Ausdehnung erfolgen.
Das Bindeglied verbindet vorzugsweise das erste und das zweite Bauteil sowohl in axialer als auch in Drehrichtung formschlüssig. Der Formschluss kann aber auch nur in einer Richtung hergestellt sein. Ein entsprechender Formschluss kann im umhüllten Bereich erzeugt werden, indem eine entsprechende Profilierung oder Hinterschneidung in dem umhüllten Bereich vorgesehen wird.

Ein einteilig umhüllendes Bindeglied kann vorzugsweise dadurch erzeugt werden, dass ein erstes und ein zweites Bauteil, die in einer Standardgröße hergestellt sind, in einem bestimmten Abstand durch die Verbindung der Bauteile durch ein Bindeglied wenigstens teilweise umhüllt werden, welches urformtechnisch um das erste und zweite Bauteil erzeugt ist. Insbesondere kann das Urformteil ein Guss- oder Spritzgussteil sein. Durch die Verwendung eines Urformverfahrens kann zur Verbindung der beiden Bauteile stufenlos die axiale Ausdehnung der Schneckenwelle eingestellt werden, ohne dass es erforderlich ist, das erste und zweite Bauteil der Schneckenwelle in irgendeiner Form zu verändern. Standardisierte Bauteile der Schneckenwelle können so auf einfache Weise an unterschiedliche Lagerabstände angepasst werden.

In einer weiteren vorteilhaften Ausgestaltung können das erste und das zweite Bauteil insbesondere kaltformtechnisch, spanend, schmiedetechnisch, sintertechnisch oder druckgusstechnisch hergestellt sein.

In einer Weiterbildung der Erfindung kann das Bindeglied in Form eines Antriebsmittels insbesondere in Form eines Zahnrads, beispielsweise in Form dieses Schneckenrads, ausgebildet sein. Die Schneckenwelle kann so an beiden Enden gelagert sein, wobei über das Zahnrad eine Drehbewegung des Schneckengangs übertragen werden kann.

Dies ermöglicht eine besonders einfache Gestaltung des zweiten Bauteils, vor allem bezüglich der Anwendung in einer elektrischen Spiegelverstelleinrichtung, indem das Schneckenrad, das durch einen Guss- oder Spritzgussvorgang hergestellt wird, während der Verbindung des ersten und zweiten Bauteils mit erzeugt wird. So kann die Herstellung des Schneckenrads und die Verbindung der beiden Bauteile der Schneckenwelle in einem Arbeitsgang realisiert werden.

In einer weiteren vorteilhaften Ausgestaltung kann das erste oder zweite Bauteil an ihren sich zugewandten Enden eine Zapf-/Bohrungsgeometrie oder eine Profilgeometrie aufweisen. Durch Zapfen und Bohrungsgeometrie, kann die Festigkeit der Schneckenwelle nach Verbinden der beiden Bauteile durch eine Verbesserung des Formschlusses erhöht werden.

Durch die Profilgeometrie kann ein zusätzlicher Formschluss geschaffen werden, der beispielsweise die Übertragung des Drehmoments zwischen den beiden Bauteilen und/oder von Bindeglied zu Bauteil verbessert.

Des Weiteren betrifft die Erfindung ein Verfahren zur Herstellung einer zuvor beschriebenen Schneckenwelle. Hierzu wird ein erstes einen Schneckengang tragendes Bauteil und ein zweites Bauteil hergestellt.

Das erfindungsgemäße Verfahren zeichnet sich dadurch aus, dass das erste und das zweite Bauteil fluchtend in einer gewünschten axialen Ausdehnung angeordnet werden und diese axiale Ausdehnung durch Anformen ein die beiden Bauteile wenigstens teilweise umhüllendes Bindeglied fixiert wird. Durch ein einteiliges Bindeglied werden die beiden Bauteile in der gewünschten axialen Ausdehnung fixiert. Die Fixierung kann vorzugsweise in wenigstens einer Richtung formschlüssig erfolgen.

In einer ersten vorteilhaften Ausgestaltung wird das Bindeglied durch ein Urformverfahren, insbesondere durch ein Guss- oder durch ein Spritzgussverfahren, hergestellt.

Die Herstellung der ersten und der zweiten Bauteile kann spanend, kaltformtechnisch, schmiedetechnisch, sintertechnisch oder druckgusstechnisch erfolgen. Auf diese Weise kann eine Schneckenwelle beliebiger Ausdehnung auf einfache Weise bedarfsgerecht erzeugt werden.

Weitere Vorteile, Merkmale und Anwendungsmöglichkeiten der vorliegenden Erfindung ergeben sich aus der nachfolgenden Beschreibung in Verbindung mit dem in den Zeichnungen dargestellten Ausführungsbeispiel.

In der Beschreibung, in den Ansprüchen und in der Zeichnung finden die in der unten aufgeführten Liste der Bezugszeichen verwendeten Begriffe und zugeordneten Bezugszeichen Verwendung. In der Zeichnung bedeutet:
- Fig. 1: ein erstes und ein zweites Bauteil einer erfindungsgemäßen Schneckenwelle;
- Fig. 2: eine erfindungsgemäße Schneckenwelle, und
- Fig. 3: eine Spiegelverstelleinrichtung.

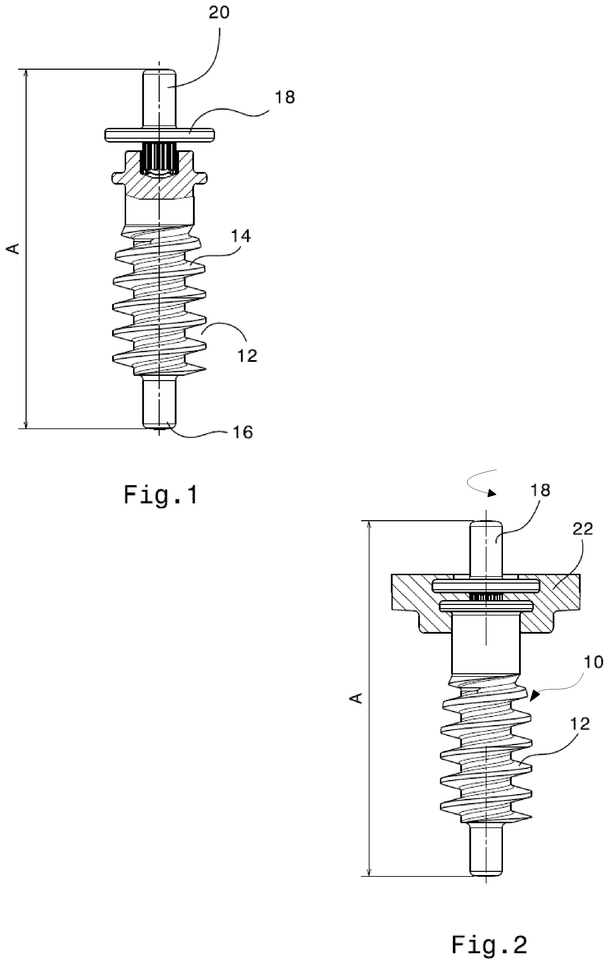

Fig. 1 zeigt ein erstes und ein zweites Bauteil einer erfindungsgemäßen Schneckenwelle 10. Das erste Bauteil 12 ist mit einem Schneckengang 14 versehen. Es weist an seinem ersten Schneckenwellenende einen Lagerzapfen 16 auf. An dem, dem ersten Bauteil abgewandten Schneckenwellenende ist das zweite Bauteil 18 angeordnet, welches einen zweiten Lagerzapfen 20 aufweist. Die ersten und zweiten Bauteile 12, 18 sind so angeordnet, dass sie die Enden des ersten Lagerzapfens 16 und des zweiten Lagerzapfens 20 in einer gewünschten axialen Schneckenwellenausdehnung A beabstandet. Wie in Fig. 2 näher beschrieben wird, werden das erste und zweite Bauteil 12, 18 so zueinander liegend fest verbunden, wodurch die axiale Ausdehnung A der Schneckenwelle 10 letztendlich festgelegt wird.

Das erste Bauteil 12 und das zweite Bauteil 18 können auf diese Weise ohne Anpassung für eine Vielzahl unterschiedlicher axialer Ausdehnungen A hergestellt werden, da wie in Fig. 2 näher beschrieben wird, die endgültige axiale Ausdehnung A der Schneckenwelle 10 durch das Bindeglied erfolgt. Fig. 1 zeigt weiterhin, dass die beiden sich zugewandten Enden des ersten Bauteils 12 und des zweiten Bauteils 18 eine Profilstruktur aufweisen. Dadurch kann ein Formschluss, der durch eine anschließend erfolgende Kunststoffumspritzung hergestellt wird, verbessert werden.

Fig. 2 zeigt eine erfindungsgemäße Schneckenwelle 10, wobei hier das erste Bauteil 12 und das zweite Bauteil 18 zur Einstellung der axialen Ausdehnung A der Schneckenwelle 10 durch ein Bindeglied, das hier in Form einer Kunststoffumspritzung der beiden Bauteile 12, 18 vorliegt, verbunden sind. Durch die Kunststoffumspritzung ist eine stufenlose Einstellung auf unterschiedliche Achsausdehnungen A möglich. Das in Fig. 2 dargestellte Bindeglied ist in Form eines Zahnrads 22 ausgestaltet. Das Zahnrad 22, welches als Bindeglied fungiert, umhüllt das erste Bauteil 12 und das zweite Bauteil 18 wenigstens teilweise. Auf diese Weise wird eine einfache Fertigung des ersten Bauteils 12 ermöglicht, wodurch trotzdem eine Drehbewegungsübertragung der Schneckenwelle 10 auf ein Zahnrad 22 gewährleistet ist.

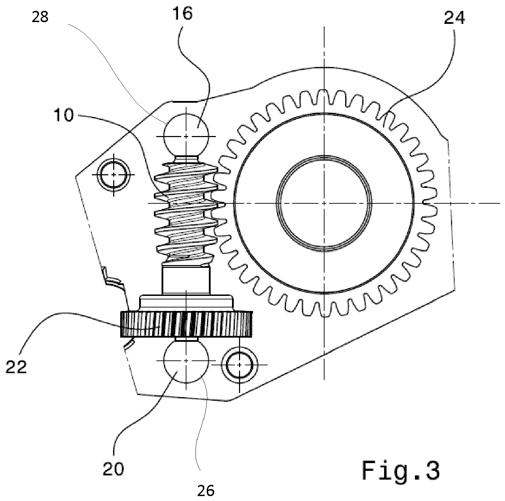

Fig. 3 zeigt eine Spiegelverstelleinrichtung, in welche eine erfindungsgemäße Schneckenwelle 10 integriert ist. Wie in Fig. 3 dargestellt, ist die Schneckenwelle 10 mit ihrem ersten Lagerzapfen 16 und mit ihrem zweiten Lagerzapfen 20 in balligen Lageraufnahmen 26, 28 eingesteckt. Dies erlaubt eine weitgehend reibungsfreie Drehung der Schneckenwelle 10. Die Lage der Schneckenwelle 10 in der Spiegelverstelleinrichtung ist so gewählt, dass das als Bindeglied wirkende Kunststoffzahnrad 22 mit einem Elektromotor in Eingriff gebracht werden kann. Die durch das Kunststoffzahnrad 22 übertragene Drehbewegung führt zu einer Drehung des den Schneckengang 14 tragendenden Bauteils 12, wodurch dieser ein Abtriebsrad (24) antreiben kann.

Durch die erfindungsgemäße Schneckenwelle 10 kann auf einfache Weise vielen Einbausituationen Rechnung getragen werden, die geringfügig unterschiedliche axiale Abstände erfordern. Dies ist insbesondere bei der Herstellung standardisierter Bauteile, wie einem Schneckenantrieb für eine Spiegelverstellung, von Bedeutung, da hier in der Regel ähnliche Konzepte mit nur geringfügigen Unterschieden in der Dimensionierung verbaut werden. Durch das erfindungsgemäße Herstellungsverfahren kann auf diese geringfügigen Unterschiede in einfacher Weise unter Verwendung standardisierter Komponenten eingegangen werden.

## Patentansprüche

1. Schneckenwelle (10), umfassend ein erstes einen Schneckengang (14) tragendes Bauteil (12) mit einem ersten Schneckenwellende, sowie ein zweites Bauteil (18) mit einem zweiten Schneckenwellenende, wobei die axiale Ausdehnung (A) der Schneckenwelle (10) durch die Beabstandung des ersten Schneckenwellenendes vom zweiten Schneckenwellenende definiert ist, wobei die axiale Ausdehnung (A) dadurch festgelegt ist, dass das erste und das zweite Bauteil (12, 18) in einem vordefinierten Abstand durch ein Bindeglied verbunden sind, wobei das Bindeglied (22) das erste Bauteil (12) und das zweite Bauteil (18) wenigstens teilweise umhüllt, **dadurch gekennzeichnet, dass** die axiale Ausdehnung (A) der Schneckenwelle (10) durch Anformen des Bindeglieds (22) fixiert ist, wobei das Bindeglied (22) einteilig ausgebildet ist.

2. Schneckenwelle (10) nach Anspruch 1, **dadurch gekennzeichnet, dass** das Bindeglied ein Urformteil, insbesondere ein Guss- oder Spritzgussteil, ist.

3. Schneckenwelle (10) nach einem der vorangehenden Ansprüche, **dadurch gekennzeichnet, dass** das Bindeglied in seiner äußeren Form einem Antriebsmittel, insbesondere einem Zahnrad (22) (Schneckenrad), entspricht.

4. Schneckenwelle (10) nach einem der vorangehenden Ansprüche 1 bis 3, **dadurch gekennzeichnet, dass** die Form des Bindeglieds derart gewählt ist, dass dieses eine wenigstens drehfeste Aufnahme eines Antriebsmittels, insbesondere eines Zahnrads (22) (Schneckenrads), ermöglicht.

5. Schneckenwelle (10) nach einem der vorangehenden Ansprüche, **dadurch gekennzeichnet, dass** das erste Bauteil (12) und das zweite Bauteil (18) an ihren äußeren axialen Enden ein Lagerelement aufweisen und an ihren sich zugewandten Enden eine Profilgeometrie aufweisen.

6. Schneckenwelle (10) nach einem der Ansprüche 1 bis 5, **dadurch gekennzeichnet, dass** das erste und zweite Bauteil (12, 18) kaltformtechnisch, spanend, schmiedetechnisch, sintertechnisch oder druckgusstechnisch hergestellte Bauteile sind.

7. Verfahren zur Herstellung einer Schneckenwelle (10) nach einem der vorangehenden Ansprüche, wobei ein erstes einen Schneckengang (14) tragendes Bauteil (12) mit einem ersten Schneckenwellenende mit einem zweiten Bauteil (18) mit einem zweiten Schneckenwellenende verbunden wird, **dadurch gekennzeichnet, dass** das erste und zweite Bauteil (12, 18) fluchtend in einer gewünschten axialen Ausdehnung (A) angeordnet werden und diese axiale Ausdehnung (A) durch Anformen eines einteiligen Bindeglieds (22) fixiert wird.

8. Verfahren nach Anspruch 7, **dadurch gekennzeichnet, dass** das Bindeglied durch ein Urformverfahren hergestellt wird.

9. Verfahren nach Anspruch 8, **dadurch gekennzeichnet, dass** das Bindeglied durch ein Guss- oder Spritzgussverfahren hergestellt wird.

## Claims

1. Worm shaft (10) comprising a first component (12) which bears a screw flight (14) and which has a first worm shaft end, and a second component (18) which has a second worm shaft end, with the axial extension (A) of the worm shaft (10) being defined by the distance between the first worm shaft end and the second worm shaft end, wherein the axial extension (A) is determined by the fact that said first and said second component (12, 18) are connected at a predefined distance from each other by a connecting member, which connecting member (22) at least partially surrounds said first component (12) and said second component (18), **characterized in that** the axial extension (A) of the worm shaft (10) is determined by said connecting member (22) being integrally formed thereon, with said connecting member (22) being made in one piece.

2. Worm shaft (10) according to claim 1 **characterized in that** the connecting member is a part formed through primary shaping, in particular a cast or injection-moulded part.

3. Worm shaft (10) according to one of preceding claims **characterized in that** the external form of the connecting member corresponds to drive means, in particular a gear (22) (worm gear).

4. Worm shaft (10) according to one of claims 1 to 3 above **characterized in that** the form of the connecting member has been chosen such that drive means, in particular a gear (22) (worm gear), can be received therein in an at least torque-resistant manner.

5. Worm shaft (10) according to one of the preceding claims **characterized in that** the outer axial ends of said first component (12) and said second component (18) have a bearing element thereon, and the ends of said components (12, 18) which face each other comprise a profile geometry.

6. Worm shaft (10) according to one of claims 1 to 5 **characterized in that** said first and said second component (12, 18) are components produced in a cold forming, machining, forging, sintering or die-casting process.

7. Method for manufacturing a worm shaft (10) according to one of the preceding claims, wherein a first component (12) which bears a screw flight (14) and which has a first screw shaft end is connected to a second component (18) which has a second worm shaft end **characterized in that** said first and said second component (12, 18) are arranged in true alignment in the desired axial extension (A) and that such axial extension (A) is fixed in position by integrally forming a one-piece connecting member (22) thereon.

8. Method according to claim 7 **characterized in that** the connecting member is produced by primary shaping.

9. Method according to claim 8 **characterized in that** the connecting member is produced in a casting or injection-moulding process.

## Revendications

1. Arbre de vis sans fin (10), comportant une première pièce (12) portant un filet (14) et pourvue d'une première extrémité d'arbre de vis sans fin, ainsi qu'une deuxième pièce (18) pourvue d'une deuxième extrémité d'arbre de vis sans fin, dans lequel l'étendue axiale (A) de l'arbre de vis sans fin (10) est définie par l'espacement de la première extrémité d'arbre de vis sans fin par rapport à la deuxième extrémité d'arbre de vis sans fin, dans lequel l'étendue axiale (A) est établie par le fait que la première et la deuxième pièce (12, 18) sont reliées à une distance prédéfinie par un élément de liaison, dans lequel l'élément de liaison (22) enveloppe au moins en partie la première pièce (12) et la deuxième pièce (18),
**caractérisé en ce que** l'étendue axiale (A) de l'arbre de vis sans fin (10) est fixée à la suite du formage de l'élément de liaison (22), dans lequel l'élément de liaison (22) est réalisé d'une seule pièce.

2. Arbre de vis sans fin (10) selon la revendication 1, **caractérisé en ce que** l'élément de liaison est une pièce réalisée par formage primaire, en particulier une pièce coulée ou moulée par injection.

3. Arbre de vis sans fin (10) selon l'une quelconque des revendications précédentes, **caractérisé en ce que** la forme extérieure de l'élément de liaison correspond à un moyen d'entraînement, en particulier à une roue dentée (22) (roue à vis sans fin).

4. Arbre de vis sans fin (10) selon l'une quelconque des revendications 1 à 3, **caractérisé en ce que** la forme de l'élément de liaison est sélectionnée de manière à permettre un logement au moins solidaire en rotation d'un moyen d'entraînement, en particulier d'une roue dentée (22) (roue à vis sans fin).

5. Arbre de vis sans fin (10) selon l'une quelconque des revendications précédentes, **caractérisé en ce que** la première pièce (12) et la deuxième pièce (18) présentent à leurs extrémités axiales extérieures un élément de palier et à leurs extrémités tournées l'une vers l'autre une géométrie de profilé.

6. Arbre de vis sans fin (10) selon l'une quelconque des revendications 1 à 5, **caractérisé en ce que** la première et la deuxième pièce (12, 18) sont des pièces fabriquées par une technique de formage à froid, par enlèvement de copeaux, par une technique de forgeage, par une technique de frittage ou par une technique de coulée sous pression.

7. Procédé de fabrication d'un arbre de vis sans fin (10) selon l'une quelconque des revendications précédentes, dans lequel une première pièce (12) portant un filet (14) et pourvue d'une première extrémité d'arbre de vis sans fin est reliée à une deuxième pièce (18) pourvue d'une deuxième extrémité d'arbre de vis sans fin, **caractérisé en ce que** la première et la deuxième pièce (12, 18) sont alignées dans une étendue axiale (A) souhaitée et cette étendue axiale (A) est fixée à la suite du formage d'un élément de liaison (22) d'une seule pièce.

8. Procédé selon la revendication 7, **caractérisé en ce que** l'élément de liaison est fabriqué par un procédé de formage primaire.

9. Procédé selon la revendication 8, **caractérisé en ce que** l'élément de liaison est fabriqué par un procédé de coulée ou de moulage par injection.
